# EUROPÄISCHE PATENTANMELDUNG

(11) **EP 1 024 585 A2**
(43) Veröffentlichungstag der Anmeldung: **02.08.2000**
(21) Anmeldenummer: 00101033.9
(22) Anmeldetag: 20.01.2000
(51) Int. Cl.: H02K 7/14, H02K 7/116

(54) **Anordnung zum Antrieb von Funktionselementen um mehrere unabhängige Achsen und Verfahren zu ihrer Herstellung**

(30) Priorität: 26.01.1999 DE 19903977
(71) Anmelder: JENOPTIK Aktiengesellschaft, 07743 Jena (DE)
(72) Erfinder: Looss, Helmut, 22145 Hamburg (DE); Weitemeyer, Werner, 25421 Pinneberg (DE); Eden, Arno, 22880 Wedel (DE); Krüger, Jürgen, 22880 Wedel (DE)

(57) **Zusammenfassung**

Die Erfindung betrifft eine Anordnung zum Antrieb von Funktionselementen um mehrere unabhängige Achsen und ein Verfahren zu ihrer Herstellung.
Die Aufgabe der Erfindung, eine neue Möglichkeit zum Antrieb von Funktionselementen um mehrere unabhängige Achsen zu finden, die bei geringer Masse und geringem Raumbedarf ein hohes Drehmoment, eine große Genauigkeit in der Positionierung und Stabilisierung des Funktionselements in der jeweiligen Achse (4; 5; 6) gewährleistet, wird erfindungsgemäß gelöst, indem die Antriebseinheit (2) bezüglich der Stütz- und Stabilisierungsfunktion des Stators (22) vollständig im Material und in der tragenden Struktur (11) des Grundkörpers (1) integriert ist, wobei der Grundkörper (1) im wesentlichen zylindrische Ausnehmungen (12) zur Aufnahme aller Komponenten der Antriebseinheit (2) aufweist und Mittel zur starren Fixierung (13; 14) mindestens gegenüber tangentialen Kräften und Momenten des Stators (22), die der Drehbewegung des Rotors (21) der Antriebseinheit (2) entgegenwirken, in der Tragstruktur (11) des Grundkörpers (1) vorgesehen sind.
Die Erfindung findet insbesondere Anwendung für spezielle Fahrzeugtechnik zur Positionierung von stabilisierten Plattformen im mobilen Einsatz sowie in der Automatisierungstechnik zum Bewegen von Roboterfunktionselementen und Manipulatoren.

## Beschreibung

Die Erfindung betrifft eine Anordnung zum Antrieb von Funktionselementen um mehrere unabhängige Achsen und ein Verfahren zu ihrer Herstellung, insbesondere für solche Anwendungen, bei denen Antriebe mit hohem Drehmoment und geringer Masse und geringem Raumbedarf gefordert sind, wie z.B. Antriebe von optischen und/oder stabilisierten Plattformen oder von mehrdimensionalen Handhabungseinrichtungen von Robotern oder Manipulatoren.
In der elektrischen Antriebstechnik kommen normalerweise Antriebseinheiten zum Einsatz, die aus einem Motor mit angekoppeltem Getriebe und einem Antriebsritzel bestehen. Eine Ausnahme bilden sogenannte Direktantriebe, wobei der Rotor des Motors direkt auf der anzutreibenden Welle montiert ist.
Aufgrund der begrenzten erzielbaren Drehmomente solcher Direktantriebe bleibt ihr Einsatz auf sehr spezielle Anwendungen begrenzt. Bei Anwendungen, die eine schnelle, präzise Positionierung von Bewegungselementen mit relativ großer Masse erfordern, ist ein Einsatz von Direktantrieben mit hohem Drehmoment aus Gründen von Gewicht- und Volumenbeschränkungen meist unmöglich. Insbesondere bei Plattformen, mit denen Funktionselemente unabhängig in mehreren Achsen bewegt werden sollen, ist wegen der Notwendigkeit mehrerer Antriebseinheiten deren Volumenminimierung unumgänglich, so daß hierfür nur kleine Antriebseinheiten mit Ritzel, d.h. bestehend aus Motor und Untersetzungsgetriebe, zum Einsatz kommen. Eine solche Anwendung ist in der Patentschrift DE 35 16 377 für die Beaobachtungseinrichtung eines Hubschraubers beschieben, wobei die Probleme des Antriebs jedoch nicht analysiert und gelöst worden sind. Aufgrund der hier (in Fig. 5 und zugehöriger Beschreibung) dokumentierten üblichen Bauweise solcher Antriebseinheiten, bei denen jede Antriebseinheit ihr eigenes Gehäuse hat und ihre Befestigung an einer Flanschfläche des Gehäuses erfolgt, ist die Lage der Flanschfläche bezogen auf den Masse-Schwerpunkt der Antriebseinheit sehr ungünstig. Dies führt bei Vibrationen im mobilen Einsatz zu extrem hohen Belastungen und damit Verformungen im Bereich des Befestigungsflansches mit solch negativen Erscheinungen, wie z.B. wechselnde Verhältnisse im Zahneingriff des Ritzels.
Daraus ergibt sich, daß die Forderungen nach geringem Gewicht und Volumen bei gleichzeitig hoher Leistungsfähigkeit bezüglich Drehmoment, Genauigkeit sowie Unempfindlichkeit gegenüber Vibrationsbelastungen (z.B. durch eine hohe Resonanzfrequenz) konträr zueinander stehen und mit den bekannten Antriebsmitteln des Standes der Technik nicht zu lösen sind.

Der Erfindung liegt die Aufgabe zugrunde, eine neue Möglichkeit zum Antrieb von Funktionselementen um mehrere unabhängige Achsen zu finden, die bei geringer Masse und geringem Raumbedarf ein hohes Drehmoment, eine große Genauigkeit in der Positionierung und Stabilisierung des Bewegungselements in der jeweiligen Achse gewährleistet.

Erfindungsgemäß wird die Aufgabe bei einer Anordnung zum Antrieb von Funktionselementen um mehrere unabhängige Achsen, bei der zur Ausrichtung der Funktionselemente für jede Drehachse mindestens eine Antriebseinheit vorhanden ist und als Träger der Funktionselemente sowie der Antriebseinheiten ein Grundkörper vorgesehen ist, dadurch gelöst, daß die Antriebseinheit bezüglich der Stütz- und Stabilisierungsfunktion des Stators vollständig im Material und in der tragenden Struktur des Grundkörpers integriert ist, wobei der Grundkörper im wesentlichen zylindrische Ausnehmungen zur Aufnahme aller Komponenten der Antriebseinheit aufweist und Mittel zur starren Fixierung mindestens gegenüber tangentialen Kräften und Momenten des Stators, die der Drehbewegung des Rotors der Antriebseinheit entgegenwirken, in der Tragstruktur des Grundkörpers vorgesehen sind.
Die Fixierung der Antriebseinheit in der Tragstruktur des Grundkörpers wird zweckmäßig formschlüssig ausgeführt. Dazu eignet sich der Einsatz von Paßstücken, wobei die Paßstücke in Nuten, die die Antriebseinheit und die zylindrische Ausnehmung in Längsrichtung der zylindrischen Ausnehmung des Grundkörpers aufweisen, angeordnet sind. In einer anderen vorteilhaften Variante wird die Antriebseinheit durch Stifte in der Tragstruktur des Grundkörpers gegen Verdrehung und zusätzlich gegen axiale Verschiebung gesichert.
Die Antriebseinheit wird in einer weiteren Ausgestaltung kraftschlüssig in der Tragstruktur des Grundkörpers fixiert. Dabei ist die Antriebseinheit vorzugsweise mittels Schrauben in der Tragstruktur des Grundkörpers fixiert. Es ergeben sich dieselben Vorteile wie bei der Verwendung von Stiften, jedoch wird zusätzlich ein besser Wärmekontakt zwischen der Antriebseinheit und der umgebenden Tragstuktur hergestellt.
Die Antriebseinheit ist vorteilhaft mit einem Getriebe versehen, das die Drehbewegung auf das jeweilige Funktionselement überträgt, um eine Drehzahlreduktion des Funktionselements zu erzielen. Dabei ist von Vorteil, wenn das Getriebe teilweise in der Struktur des Grundkörpers integriert ist, wobei die Antriebseinheit eine Abtriebswelle mit Ritzel aufweist und für jedes der Funktionselemente ein Zahnkranz mit großem Radius zur Übertragung der Drehbewegung vom Ritzel auf das Funktionselement vorhanden ist und im Grundkörper gelagert bzw. geführt wird.
Für bestimmte Anwendungen kann es erforderlich sein, daß die Antriebseinheit vor der mit dem Ritzel versehenen Abtriebswelle ein zusätzliches Getriebe enthält. Dieses ist zweckmäßig ein koaxiales Getriebe, wodurch die Kompaktheit und Symmetrie der gesamten Antriebseinheit erhalten bleibt.
Bei Einbringung der Antriebseinheit in die Tragstruktur des Grundkörpers gibt es verschiedene Möglichkeiten, das Ritzel, das den (großen) Zahnkranz des Funktionselements antreibt, zu lagern. In einer ersten Variante ist das Ritzel fliegend gelagert. Eine stabilere und damit für viele Anwendungen zweckmäßigere Möglichkeit besteht darin, das Ritzel beidseitig zu lagern. Während das Ritzel einerseits entweder mit einem Lager der Motorwelle oder der Lagerung der Abtriebswelle des zusätzlichen Getriebes der Antriebseinheit gelagert ist gibt es für das Gegenlager des Ritzels Gestaltungsmöglichkeiten, die sich in ihrem Fertigungsaufwand und der erreichbaren Stabilität unterscheiden. Zum einen ist es der Stabilitätsforderung des Ritzeleingriffs in den angetriebenen Zahnkranz zuträglich, wenn das Ritzel in der Tragstruktur des Grundkörpers integriert ist. Zum anderen sind die Anforderungen an Justierung und Fertigung wesentlich geringer, wenn das Gegenlager des Ritzels in einer mit der Antriebseinheit verbundenen Hilfsstruktur montiert ist.
In diesem Fall ist die Hilfsstruktur vorteihaft am Gehäuse des des zusätzlichen Getriebes angebracht ist.
Für eine spielfreie Kraftübertragung vom Ritzel auf den (großen) Zahnkranz des Funktionselements ist vorteilhaft eine mechanisch verspannte Ritzelanordnung einzusetzen. Die mechanisch verspannte Ritzelanordnung besteht vorzugsweise aus zwei Teilritzeln mit gleicher Verzahnung, wobei ein Teilritzel starr und das andere drehbar eng benachbart auf der Abtriebswelle der Antriebseinheit befestigt sind und ein zwischen den Teilritzeln befindliches Federelement (Torsionsfeder, Zugfeder oder Druckelement) durch Verdrehen des drehbaren Teilritzels gespannt arretiert ist, wenn beide Teilritzel in den (großen) Zahnkranz des Funktionselements eingreifen.
In einer anderen Ausführung weist die mechanisch verspannte Ritzelanordnung ein gewöhnliches Ritzel auf der Abtriebswelle der Antriebseinheit und zwei zusätzliche Getriebeelemente mit identischer Verzahnung und jeweils zwei Zahnrädern auf, über die das Ritzel der Abtriebswelle den großen Zahnkranz antreibt, wobei die beiden Zahnräder des einen Getriebeelementes starr verbunden und die des anderen auf einer Achse mittels Torsion einer Feder gekoppelt sind. Beide Ritzelanordnungen gewährleisten, daß die treibenden Zahnräder am getriebenen Zahnkranz unterschiedliche Zahnflanken beanspruchen und somit praktisch ein spielfreier Zahnradantrieb vorliegt.
Es erweist sich als vorteilhaft, wenn die Antriebseinheit mit verschiedenen zusätzlichen Komponenten in einer Stützkonstruktion montiert ist, wobei die Stützkonstruktion zur Justierung der Komponenten zueinander und nicht zur Aufnahme der durch die Rotorbewegung auf den Stator ausgeübten Kräfte und Momente vorgesehen ist.
Als Stützkonstruktion eignet sich vorzugsweise eine zylindrische Hülse.
Die Antriebseinheit kann vorteilhaft als zusätzliche Komponenten eine Bremse und/oder einen Positionsgeber zur Antriebssteuerung und Positionsbestimmung des angetriebenen Funktionselements enthalten. Für bestimmte Anwendungen ist es vorteilhaft oder sogar erforderlich, bei Ausfall der Antriebseinheit einen Notantrieb vorzusehen.
Dieser ist im einfachsten Fall ein Anschluß für einen Handantrieb am rückwärtigen Ende der Antriebseinheit. Ist das rückwärtige Ende der Antriebseinheit schwer zugänglich oder aus einem anderen Grund für einen Handantrieb nicht geeignet, wird vorzugsweise ein elektrischer Notantrieb eingesetzt. Dieser kann in besonderen Fällen auch eine völlig selbständige Antriebseinheit der erfindungsgemäßen Art sein und sogar als redundante Antriebseinheit in denselben angetriebenen Zahnkranz des zu bewegenden Funktionselements eingreifen.

Die Aufgabe wird erfindungsgemäß mit einem Verfahren zur Herstellung von strukturintegrierten Antriebseinheiten, dadurch gelöst, daß die notwendigen und ergänzenden Elemente der Antriebseinheit in Form von aufeinander abgestimmten im wesentlichen zylindrischen Komponenten mit einheitlichem Durchmesser gefertigt werden, die Komponenten der Antriebseinheit in eine bezüglich Form und Größe angepaßte umhüllende Stützkonstruktion eingesetzt und in dieser zueinander justiert werden, wobei die Stützkonstruktion nicht zur Aufnahme der durch die Rotorbewegung auf den Stator ausgeübten Kräfte und Momente geeignet ist, die Stützkonstruktion mit den justierten Komponenten der Antriebseinheit in eine passend vorgefertigte, im wesentlichen zylindrische Ausnehmung im Material der tragenden Struktur eines Grundkörpers eingesetzt wird und die Komponenten der Antriebseinheit durch die Stützkonstuktion hindurch im Material der tragenden Struktur des Grundkörpers gegen Verdrehen um die Achse der Antriebseinheit gesichert werden.

Die Grundidee der Erfindung basiert auf der Überlegung, daß bei kleinen und leichten Kompaktantrieben, die an einem Grundkörper die Bewegung von Funktionselementen realisieren, große Drehmomente in der Regel zu Verformungen der Flanschelemente des Antriebs führen, in deren Folge Störungen der Wärmeableitung und der Getriebeeingriffe entstehen. Diese Probleme werden nahezu vollständig mittels einer lastsymmetrischen Antriebshalterung innerhalb der tragenden Struktur des Grundkörpers beseitigt Dazu sieht eine vorzuziehende Ausgestaltung der Erfindung vor, die Komponenten der Antriebseinheit in einer leichten Stützkonstruktion vorzumontieren und zu justieren, bevor sie als gesamtes Antriebspaket in die passende Ausnehmung der Tragstruktur des Grundkörpers eingesetzt wird und alle nicht rotierenden Komponenten der Antriebseinheit starr, mindestens gegen Verdrehen um die Abtriebswelle, in der Tragstruktur befestigt werden.
Die Erfindung ermöglicht somit die Realisierung von Antrieben für Funktionselemente um mehrere unabhängige Achsen ortsfest zu einem Grundkörper, die bei geringer Masse und geringem Raumbedarf ein hohes Drehmoment, eine große Genauigkeit in der Positionierung und Stabilisierung des Bewegungselements in der jeweiligen Achse gewährleisten. Weiterhin werden einfache Fertigung und Justierung solcher Antriebe ermöglicht.

Die Erfindung soll nachstehend anhand von Ausführungsbeispielen näher erläutert werden.
Die Zeichnungen zeigen:
- Fig. 1:: den Prinzipaufbau einer erfindungsgemäßen Antriebseinheit,
- Fig. 2:: eine mögliche Variante zur Einbringung von erfindungsgemäßen Antriebseinheiten in die Tragstruktur einer zweiachsigen Plattform (Grundkörper),
- Fig. 3:: eine Ausführungsform der erfindungsgemäßen Antriebseinheit in einer Stützstruktur zur Vormontagen und Justierung der Antriebskomponenten, und
- Fig. 4:: eine Variante zur Realiserung einer verspannten Ritzelanordnung.

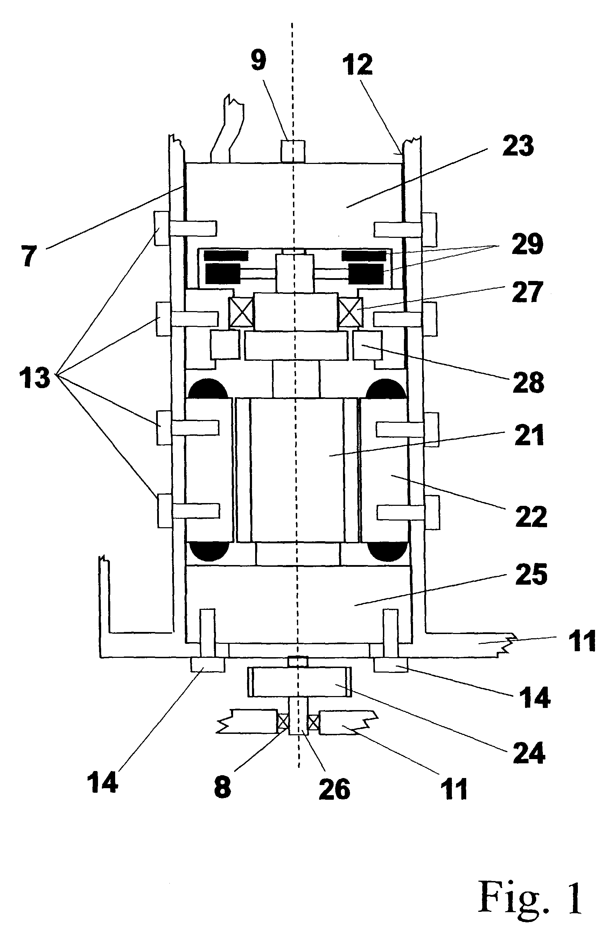

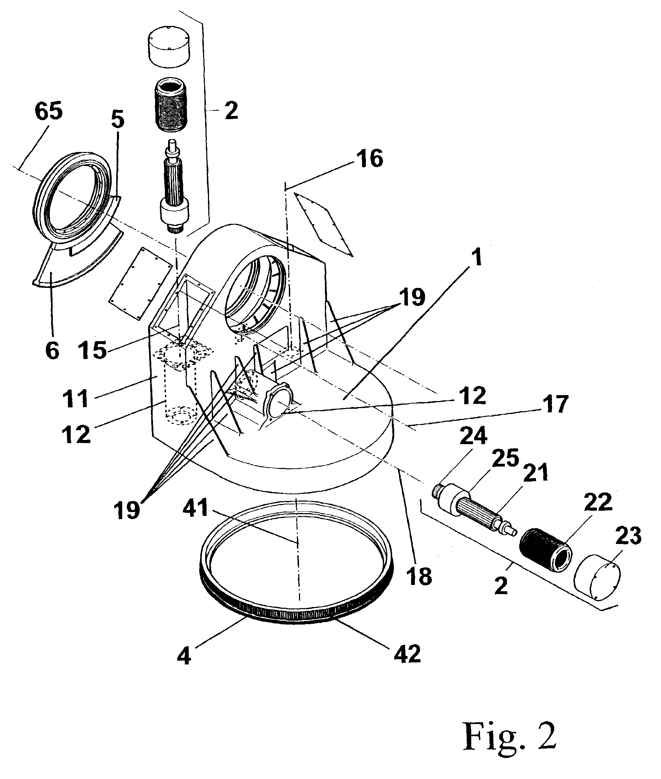

Die erfindungsgemäße Anordnung besteht -wie aus Fig. 1 entnehmbar - aus einer tragenden Struktur 11 eines Grundkörpers 1 (nur in Fig. 2 dargestellt), einer Antriebseinheit 2, die zumindest aus Rotor 21 und Stator 22 besteht und Fixierungsmitteln in Form von Schrauben 13 oder Stiften 14, die den Stator 22 und mögliche andere statische Ergänzungskomponenten der Antriebseinheit 2 gegen Verdrehen infolge der durch die Rotorbewegung erzeugten Kräfte und Momente arretiert. Der Rotor 21 steht mit einer Abtriebswelle 26 der Antriebseinheit 2 in Verbindung, auf der ein Ritzel 24 befestigt ist, das jeweils ein Funktionselement 4, 5 oder 6 (nur in Fig. 2 dargestellt) um eine körperfeste Drehachse 41 oder 65 des Grundkörpers 1 dreht.
Der Rotor 21 ist vorzugsweise ein bürstenlos angetriebener Permanentmagnetläufer. Er greift mit seiner Rotorwelle, wie in Fig. 1 als bevorzugte Variante dargestellt, abtriebsseitig in ein zusätzliches untersetzendes Getriebe 25 ein. Aus Platz- und Symmetriegründen ist diese als koaxiales Getriebe ausgebildet. Es enthält zugleich die Lagerfunktionen sowohl für die Rotorwelle als auch für die Abtriebswelle 26, auf der das Ritzel 24 sitzt. Das Ritzel 24 ist zur Stabilisierung in einem Ritzelgegenlager 8, das in diesem Fall in der Tragstruktur 11 des Grundkörpers 1 eingearbeitet ist.
Auf der der Abtriebswelle 26 entgegengesetzten Seite des Rotors 21 sind in derselben zylindrischen Außenform wie der Stator 22 ein Positionsgeber 28 und eine Bremse 29 angebracht. Der Positionsgeber 28 kann für die Antriebssteuerung, z.B. bei bürstenlosen Synchronmotoren, benutzt werden, dient andererseits aber auch zur Positionsermittlung der angetriebenen Achsen 41 oder 65.
Benachbart zum Positionsgeber 28 ist auf der Rotorwelle die Bremse 29 angeordnet, deren Funktion im Normalfall die einer Haltebremse ist. In besonderen Fällen, z.B. im Rahmen von spezifischen Sicherheitsforderungen, kann es jedoch notwendig sein, daß die angetriebene Nutzlast auf der Drehachse 41 im Notfall aus voller Geschwindigkeit heraus abgebremst werden muß. Das üblicherweise in einer Abschußkappe 23 vorhandene Antriebsgegenlager 27 ist in diesem Beispiel zwischen Positionsgeber 28 und Bremse 29 angeordnet. Aus fertigungstechnischer Zweckmäßigkeit enthält die Abschlußkappe 23 in diesem Fall lediglich die Bremse 29 und der Positionsgeber 28 ist mit dem Antriebsgegenlager 27 in einem weiteren zylindrischen Bauteil montiert. Alle nunmehr beschriebenen Komponenten der Antriebseinheit 2 sind in einer im Achslängsschnitt gezeichneten zylindrischen Ausnehmung 12 der Tragstruktur 11 des Grundkörpers 1 eingesetzt und werden zur Aufnahme der durch die Bewegung des Rotors 21 verursachten Kräfte und Momente in der Tragstruktur 11 starr befestigt In dem in Fig. 1 dargestellten Beispiel sind alle statischen Antriebskomponenten in der Tragstruktur 11 mittels Schrauben 13 oder mittels Stiften 14 starr befestigt. D.h. die Befestigung kann kraft- und/oder formschlüssig sein. Bei schlechter Zugänglichkeit ist auch eine formschlüssige Kraftübertragung mit langen Paßstücken denkbar, die in den Wandungen der zylindrischer Ausnehmung 12 und den einzelnen Komponenten des Antriebs 2 jeweils in vorgefertigte Nuten eingesetzt werden. Da die formschlüssige Befestigung in der zylindrischen Ausnehmung 12 in erster Linie die Komponenten der Antriebseinheit 2 gegen Verdrehen sichern soll, sind die Nuten und damit die Paßstücke entlang der Mantellinie der zylindrischen Ausnehmung 12 auszurichten. Es sind ebenso auch Verzahnungen der Antriebskomponenten mit der zylindrischen Ausnehmung 12 entlang der gesamten Zylinderwandung als wirksame formschlüssige Sicherung gegen Verdrehen einsetzbar.
In Fig. 2 ist eine Anwendung der erfindungsgemäßen Antriebe in einer Explosivdarstellung gezeigt, bei der hohe Anforderungen an die Dynamik, die Steifigkeit und die Genauigkeit der Ausrichtung gestellt werden. Der Grundkörper 1 ist hier eine gewinkelte zweiachsige Plattform, die als Träger von Antrieben für zwei körperfeste Drehachsen 41 und 65 ausgebildet ist. Gegenüber der Plattform (Grundkörper 1) sind insgesamt drei Funktionselemente 4, 5 und 6 zu bewegen, wobei jede Einzelbewegung eine Drehbewegung ist und zwei der Funktionselemente 5 und 6 eine gemeinsame Drehachse 65 aufweisen. Jedes Funktionselement 4, 5 und 6 weist einen Zahnkranz mit großem Durchmesser auf, von denen in Fig. 2 jedoch nur der volle Zahnkranz 42 bezeichnet ist, der an einem Basisgestell (nicht darstellt) als Funktionselement 4 befestigt ist.
Der gewinkelte Grundkörper 1, dessen Steifigkeit bei relativ geringer Wandstärke durch Streben 19 erhöht wird, ist ein speziell gefertigtes Gußteil, in das zylindrische Ausnehmungen 12 zur Aufnahme der Antriebseinheiten 2 direkt in dessen tragende Struktur 11 eingebracht wurden. Die Ausnehmungen 12 sind so eingebracht, daß die Antriebseinheiten 2 paßgenau eingeschoben werden können. Die Antriebseinheiten 2 werden in der Tragstruktur 11 des Grundkörpers 1 um ihre jeweilige Achse 15 oder 18 der zylindrischen Ausnehmung 12, wie bereits zu Fig. 1 beschrieben, gegen Verdrehen gesichert. Dabei ragt die Abtriebsachse 26 mit dem Ritzel 24 aus der Tragstruktur 11 heraus, um in den jeweiligen Zahnkranz des Funktionselements 4, 5 oder 6 einzugreifen.
Rotor 21, Getriebe 25 und Abtriebswelle 26 mit Ritzel 24 der Antriebseinheit 2 werden in die tragende Struktur 11 des Grundkörpers 1 eingeschoben. Der Stator 22 wird ebenfalls in das 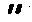 Statorgehäuse" in Form der zylindrischen Ausnehmung 12 der Tragstruktur 11 gesteckt. Rückwärtig zur Abtriebswelle 26 wird dann die Antriebseinheit 2 in der Tragstruktur 11 durch eine Abschlußkappe 23 fixiert, die mindestens das Rotorgegenlager 27 und optional einen Positionsgeber 28 und eine Bremse 29 enthält.

Während die Ausnehmung 12 um die Achse 15 direkt ins volle Material des Grundkörpers 1 eingearbeitet ist, ist die Ausnehmung 12 um die Achse 18 der zweiten dargestellten Antriebseinheit 2 für das Funktionselement 6 in größerem Maße durch die Tragstruktur 11 des Grundkörpers 1 in Form einer abgeformten Gehäusestruktur mit Streben 19 integriert worden. Beide ziemlich verschiedenen Einbettungen in die Tragstruktur 11 des Grundkörpers 1 erfüllen jedoch neben der Gewicht- und Volumenminimierung der Antriebe vor allem die symmetrische Lastverteilung am strukturintegrierten 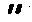 Gehäuse" und garantieren damit eine außerordentlich hohe Konstanz der Lage der Achsen 15 und 18 als Drehachsen der Antriebseinheiten 2. Damit bleibt im Austauschfall aufgrund von Verschleiß der Ersatz allein auf die eingesetzten Antriebskomponenten Rotor 21 (ggf. mit Getriebe 25) und Abtriebswelle 26 mit Ritzel 24) sowie Stator 22 und mögliche Verschleißelemente in der Abschlußkappe 23 mit Rotorgegenlager 27 beschränkt. Eine Verformung des 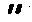 Gehäuses", wie im Stand der Technik bekannt durch unsymmetrische Flanschverbindung des Antriebs auf der Plattform, wird damit durch die Erfindung vermieden.
Bei Anwendungen mit sehr hoher Drehgeschwindigkeit der anzutreibenden Drehachse 41 oder 65 des Funktionselements 4, 5 oder 6 kann es sinnvoll sein, das Ritzel 24 direkt auf die Rotorwelle aufzusetzen, so daß das Getriebe 25 entfällt. Dabei kann auch die Verzahnung direkt auf der Rotorwelle aufgebracht sein, so daß es kein separates Ritzel 24 aufgesetzt ist. Ausnahmsweise kann das Ritzel 24 für kleine und leichte Funktionselemente 4, 5 oder 6 mit geringeren Genauigkeitsanforderungen auch ein Reibrad sein.
Für das Funktionselement 4, das in Fig. 2 ein Basisgestell für den als stabisierte Plattform ausgebildeten Grundkörper 1 ist, wird die Antriebseinheit 2 in der zur Achse 15 gehörige zylindrische Ausnehmung 12 angeordnet. Da der Grundkörper 1 symmetrisch gegenüber der gemeinsamen Drehachse 65 der Funktionselemente 5 und 6 ist, läßt sich bezüglich der Drehachse 41 des Funktionselements 4 in eine Ausnehmung 12 mit der Achse 16 eine weitere Antriebseinheit 2 einbringen. Diese kann als synchron betriebene Antriebeinheit 2 die Leistungsfähigkeit des Antriebs um die Drehachse 41 permanent verbessern.
Für spezielle Anwendungen, wie hier für die in Fig. 2 angedeutete Richtmechanik, kann es aus Gründen der Lastverteilung oder der stationären Positioniergenauigkeit erforderlich sein, daß das angetriebene Funktionselement 4, 5 oder 6 bei Ausfall einer Antriebseinheit 2 in eine bestimmte Position (Anfangs- oder Normalposition) zurückbewegt werden muß. Hierfür ist am rückwärtigen Ende 9 der Rotorwelle der Antriebseinheit 2 (Fig.1) im einfachsten Fall eine Vorkehrung für einen Handantrieb (nicht darestellt) vorzusehen. Ist die Antriebseinheit 2 anwendungsbedingt nicht zugänglich, ergibt sich die Möglichkeit, an gleicher Stelle einen elektrischen Notantrieb vorzusehen. Dieser elektrische Notantrieb kann aber auch vollkommen redundant zum eigentlichen Antrieb ausgeführt sein, wenn er in Fig. 2 in die zylindrische Ausnehmung mit der Zylinderachse 16 eingesetzt wird. Er kann dann entweder ein echter Notantrieb sein, der im Normalbetrieb tot mitläuft, oder - wie bereit oben beschrieben - als zusätzliche Antriebsunterstützung ständig synchron zur Antriebseinheit 2 in der Ausnehmung 12 um die Zylinderachser 15 betrieben werden.

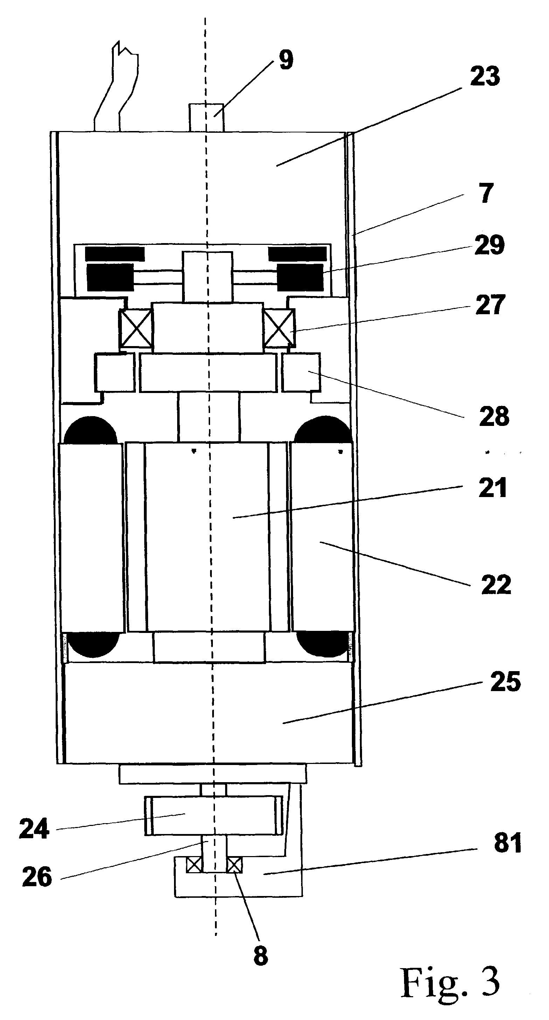

Die in die Tragstruktur 11 integrierte Antriebseinheit 2 ist in Fig. 3 in ihrem Vorfertigungsstadium (vor dem Einsetzen in den Grundkörper 1) dargestellt. Die Komponenten der Antriebseinheit 2 sind der Rotor 21 und der Stator 22, das Ritzel 24 auf der Abtriebswelle 26 und das zwischengekoppelte koaxiale Getriebe 25. Das Getriebe 25 ist nicht unbedingt als koaxiales Getriebe erforderlich, jedoch aus Platz- und Integrationsgründen eine bevorzugte Variante. Das Getriebe 25 ist deshalb jeweils nur als in einem tragenden Gehäuse untergebrachte Einheit gezeichnet.
Zusammen mit der Abschlußkappe 23, die Rotorgegenlager 27, Positionsgeber 28 und Bremse 29 enthält, werden alle Komponenten zum leichteren Einbau in die Tragstruktur 11 in einer Hülse 7 vormontiert und justiert. Die Hülse 7 ist dabei nur Stützkonstruktion zur Justierung der Komponenten und nicht geeignet, die Motordrehmomente aufzunehmen. Die Montage basiert also auf der maßhaltigen Fertigung aller Komponenten mit zylindrischer Außenform, so daß sie praktisch in der Hülse 7 nur der Reihe nach eingestapelt werden müssen.
Die Ausführung des Ritzels 24 und seine Lagerung erlauben mehrere Varianten. Die bevorzugte Variante ist die fliegende Lagerung, d.h. die Abtriebswelle 26 ist innerhalb des Getriebes 25 ausreichend gelagert und das Ritzel befindet sich auf dem freien Ende der Abtriebswelle. Bei großen Belastungen (Drehmomenten) ist jedoch eine zweite Lagerstelle aus Stabilitätsgründen immer angezeigt. Dazu ist bereit in Fig.1 und der zugehörigen Beschreibung eine zweite Lagerstelle in Form eines in die Tragstruktur 11 des Grundkörpers 1 eingebrachten Gegenlagers 8 angegeben. Diese Konstruktion erfordert hohe Präzision in der Fertigung der Antriebseinheit 2 und der Tragstruktur 11 und ist deshalb bei wechselndem Zukauf von Antriebseinheiten (z.B. wegen unterschiedlicher Antriebsanforderungen) nicht immer einzuhalten.
In Fig. 3 ist nunmehr eine weitere sinnvolle konstruktive Lösung für eine zusätzliche Lagerung der Abtriebswelle 26 dargestellt. Hier wird das Gegenlager 8 einfach mit der vorgefertigten Antriebseinheit 2 realisiert, indem eine Haltestruktur 81 das Gegenlager 8 mit dem Getriebe 25 verbindet.

Das Ritzel 24 kann zur Verbesserung der stationären Positioniergenauigkeit des beispielhaft ausgewählten Funktionselements 4 bezüglich seines Eingriffs in den Zahnkranz 42 verspannt ausgeführt werden.
Diese Verspannung wird im einfachsten Fall dadurch erreicht, daß zwei identisch verzahnte Teilritzel eng benachbart über eine Torsionsfeder gegeneinander verspannt in den angetriebenen Zahnkranz eingreifen, so daß die Zähne der beiden Teilritzel jeweils an entgegengesetzten Zahnflanken des angetriebenen Zahnkranzes 42 anliegen. Dadurch ergibt sich eine spielfreie Kraftübertragung und somit eine hochgenaue Positionierung und/oder Stabilisierung der Bewegung des Funktionselements 4 (hier: Plattform oder beliebige andere Gerätekomponente) in der betreffenden Drehachse 41.

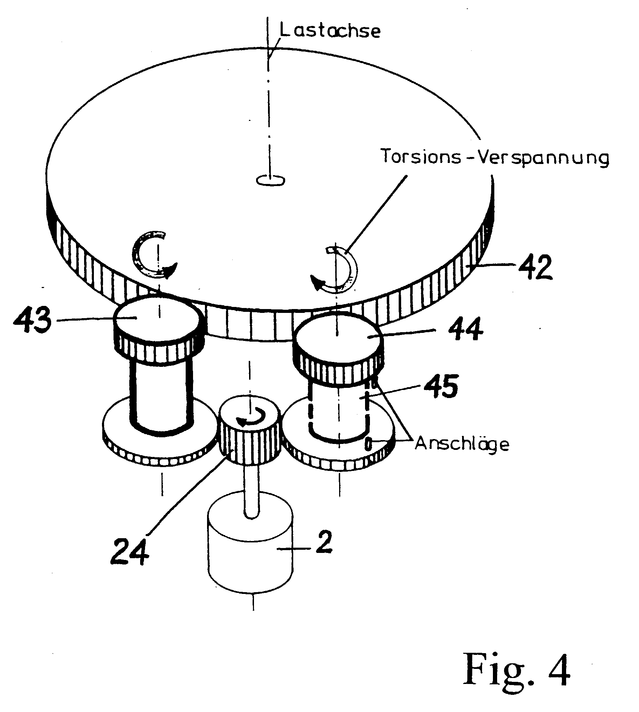

Fig. 4 zeigt für denselben Zweck eine ähnliche, aber aufwendigere Möglichkeit zur Erzielung einer mechanischen Verspannung des Ritzels 24 gegenüber dem angetriebenen Zahnkranz 42, die ebenfalls auf der Grundlage einer Torsionsverspannung beruht. Hierbei greift das von der Antriebseinheit 2 getriebene Ritzel 24 über zwei bezüglich ihrer Verzahnung gleichartige Getriebeelemente 43 und 44 in den angetriebenen Zahnkranz 42 ein. Während das Getriebeelement 43 aus auf einer Achse starr befestigten Zahnrädern besteht und der Kraftübertragung vom Ritzel 24 auf den angetriebenen Zahnkranz 42 dient, sind im Getriebeelement 44 zwei identisch zum Getriebeelement 43 verzahnte Zahnräder vorhanden, die auf derselben Achse gegeneinander drehbar sind und Anschläge zur Torsion einer zwischen ihnen befindlichen Spiralfeder 45 aufweisen. Durch die Drehung des oberen Zahnrades des Getriebeelements 44 gegenüber dem unteren Zahnrad wird vor dem Einsetzen in den Zahnkranz 42 eine Torsion der Spiralfeder 45 erzielt. Dadurch wirkt das in den angetriebenen Zahnkranz 42 eingreifende obere Zahnrad des Getriebeelements 44 der Drehrichtung des treibenden Zahnrades des Getriebeelements 43 mit einer definierten Kraft entgegen. Daraus ergibt sich, daß - obwohl beide Getriebeelemente 43 und 44 durch das Ritzel 24 in eine gleichsinnige Rotationsbewegung versetzt werden - gegenläufige Kraftkomponenten auf den angetriebenen Zahnkranz 42 wirken, wie die gegenläufigen Rotationspfeile um die Rotationsachsen der Getriebeelemente 43 und 44 verdeutlichen sollen.

Die wesentlichen Vorteile der erfindungsgemäßen Anordnung zum Antrieb von Funktionselementen um mehrere unabhängige Achsen sollen abschließend nochmals zusammenfaßt werden. Sie bestehen in einer
- Verbesserung der Kompaktheit und Struktursteifigkeit des antriebstragenden Grundkörpers 1, da die Antriebseinheit 2 nur den notwendigen Raum in der innerhalb Tragstruktur 11 und im wesentlichen auch innerhalb des Materials des Grundkörpers 1 einnimmt und die umgebende Struktur damit alle auftretenden Antriebsmomente symmetrisch zur Antriebsachse aufnimmt,
- Verringerung des Gesamtgewichts aus Tragstruktur 11 und Antriebseinheit 2,
- Verbesserung des Vibrationsverhaltens der Antriebseinheit 2, da sie großflächig in die Tragstruktur 11 integriert ist und eine höhere Resonanzfrequenz erhält, und
- Verbesserung der Wärmeabfuhr durch direkte Ankopplung des Stators 22 an die Tragstruktur 11, dadurch Vermeidung von Wärmenestern, wie sie bei konventioneller Motoranordnung zwischen Motorgehäuse und Tragstruktur entstehen,

### Liste der verwendeten Bezugszeichen

- 1: Grundkörper
- 11: Tragstruktur
- 12: (zylindrische) Ausnehmung
- 13: Schrauben
- 14: Stifte
- 15, 16, 17, 18: Achsen
- 19: Streben
- 2: Antriebseinheit
- 21: Rotor
- 22: Stator
- 23: Abschlußkappe
- 24: Ritzel
- 25: Getriebe
- 26: Abtriebsachse
- 27: Rotorgegenlager
- 28: Positionsgeber
- 29: Bremse
- 4: Funktionselement
- 41: Drehachse
- 42: Zahnkranz
- 43, 44: Getriebeelemente
- 45: Spiralfeder
- 5, 6: Funktionselemente
- 7: Hülse
- 8: Ritzelgegenlager
- 9: rückwärtiges Ende der Rotorwelle

## Patentansprüche

1. Anordnung zum Antrieb von Funktionselementen um mehrere unabhängige Achsen, bei der zur Ausrichtung der Funktionselemente für jede Drehachse mindestens eine Antriebseinheit vorhanden ist und als Träger der Funktionselemente sowie der Antriebseinheiten ein Grundkörper vorgesehen ist dadurch gekennzeichnet, daß
die Antriebseinheit (2) bezüglich der Stütz- und Stabilisierungsfunktion des Stators (22) vollständig im Material und in der tragenden Struktur (11) des Grundkörpers (1) integriert ist, wobei der Grundkörper (1) im wesentlichen zylindrische Ausnehmungen (12) zur Aufnahme aller Komponenten der Antriebseinheit (2) aufweist und Mittel zur starren Fixierung (13; 14) mindestens gegenüber tangentialen Kräften und Momenten des Stators (22), die der Drehbewegung des Rotors (21) der Antriebseinheit (1) entgegenwirken, in der Tragstruktur (11) des Grundkörpers (1) vorgesehen sind.

2. Anordnung nach Anspruch 1, dadurch gekennzeichnet, daß
die Fixierung der Antriebseinheit formschlüssig ist.

3. Anordnung nach Anspruch 2, dadurch gekennzeichnet, daß
die Antriebseinheit (1) durch Paßstücke in der Tragstruktur (11) des Grundkörpers (1) fixiert ist, wobei die Paßstücke in Nuten, die die Antriebseinheit (2) und die zylindrische Ausnehmung (12) in Längsrichtung der zylindrischen Ausnehmung (12) des Grundkörpers (1) aufweisen, angeordnet sind.

4. Anordnung nach Anspruch 2, dadurch gekennzeichnet daß
die Antriebseinheit (2) durch Stifte (14) in der Tragstruktur (11) des Grundkörpers (1) fixiert ist.

5. Anordnung nach Anspruch 1, dadurch gekennzeichnet, daß
die Antriebseinheit (2) kraftschlüssig in der Tragstruktur (11) des Grundkörpers (1) fixiert ist.

6. Anordnung nach Anspruch 5, dadurch gekennzeichnet, daß
die Antriebseinheit (2) mittels Schrauben (13) in der Tragstruktur (11) des Grundkörpers (1) fixiert ist.

7. Anordnung nach Anspruch 1, dadurch gekennzeichnet, daß
die Antriebseinheit (2) mit einem Getriebe versehen ist, das die Drehbewegung auf das jeweilige Funktionselement (4; 5; 6) überträgt.

8. Anordnung nach Anspruch 7, dadurch gekennzeichnet daß
das Getriebe teilweise in der Struktur des Grundkörpers (1) integriert ist, wobei die Antriebseinheit (2) eine Abtriebswelle (26) mit Ritzel (24) aufweist und für jedes der Funktionselemente (4; 5; 6) ein Zahnkranz (42) mit großem Radius zur Übertragung der Drehbewegung vom Ritzel (24) auf das Funktionselement (4; 5; 6) vorhanden ist.

9. Anordnung nach Anspruch 8, dadurch gekennzeichnet, daß
die Antriebseinheit (2) vor der mit dem Ritzel (24) versehenen Abtriebswelle (26) ein zusätzliches Getriebe (25) enthält.

10. Anordnung nach Anspruch 9, dadurch gekennzeichnet daß
das zusätzliche Getriebe (25) ein koaxiales Getriebe ist.

11. Anordnung nach Anspruch 8, dadurch gekennzeichnet, daß
das Ritzel (24) fliegend gelagert ist.

12. Anordnung nach Anspruch 8, dadurch gekennzeichnet, daß
das Ritzel (24) beidseitig gelagert ist.

13. Anordnung nach Anspruch 12, dadurch gekennzeichnet, daß
das Gegenlager (8) des Ritzels (24) in der Tragstruktur (11) des Grundkörpers (1) integriert ist.

14. Anordnung nach Anspruch 12, dadurch gekennzeichnet, daß
das Gegenlager (8) des Ritzels (24) in einer mit der Antriebseinheit (2) verbundenen Hilfsstruktur (81) montiert ist.

15. Anordnung nach Anspruch 9 und 14, dadurch gekennzeichnet daß
die Hilfsstruktur (81) am Gehäuse des weiteren Getriebes (25) angebracht ist.

16. Anordnung nach Anspruch 12, dadurch gekennzeichnet, daß
das Ritzel (24) zur spielfreien Kraftübertragung auf den Zahnkranz (42) des Funktionselements (4; 5; 6) eine mechanisch verspannte Ritzelanordnung ist.

17. Anordnung nach Anspruch 16, dadurch gekennzeichnet daß
die mechanisch verspannte Ritzelanordnung aus zwei Teilritzeln mit gleicher Verzahnung besteht, wobei ein Teilritzel starr und das andere drehbar eng benachbart auf der Abtriebswelle (26) der Antriebseinheit (2) befestigt sind und ein durch Verdrehen des drehbaren Teilritzels gespannt arretiert ist, wenn beide Teitritzel in den Zahnkranz (42) des Funktionselements (4; 5; 6) eingreifen.

18. Anordnung nach Anspruch 17, dadurch gekennzeichnet, daß das zwischen den Teilritzeln befindliche Federelement eine tordierte Spiralfeder (45) ist.

19. Anordnung nach Anspruch 16, dadurch gekennzeichnet, daß
die mechanisch verspannte Ritzelanordnung ein Ritzel (24) auf der Abtriebswelle (26) der Antriebseinheit (2) und zwei zusätzliche Getriebeelemente (43; 44) mit identischer Verzahnung und jeweils zwei Zahnrädern aufweist, über die das Ritzel (24) der Abtriebswelle (26) in den Zahnkranz (42) eingreift, wobei die beiden Zahnräder des einen Getriebeelementes (43) starr miteinander verbunden und die des anderen Getriebeelementes (44) auf einer Achse mittels Torsion einer Spiralfeder (45) gekoppelt und verspannt sind.

20. Anordnung nach Anspruch 1, dadurch gekennzeichnet daß
die Antriebseinheit (2) als Antriebspaket mit verschiedenen zusätzlichen Komponenten in einer Stützkonstruktion (7) montiert ist, wobei die Stützkonstruktion (7) zur Justierung der Komponenten zueinander und nicht zur Aufnahme der durch die Rotorbewegung auf den Stator (22) ausgeübten Kräfte und Momente vorgesehen ist.

21. Anordnung nach Anspruch 20, dadurch gekennzeichnet, daß
die Stützkonstruktion eine zylindrische Hülse (7) ist.

22. Anordnung nach Anspruch 1, dadurch gekennzeichnet, daß
die Antriebseinheit einen Positionsgeber (28) zur Antriebssteuerung und Positionsbestimmung des angetriebenen Funktionselements (4; 5; 6) enthält

23. Anordnung nach Anspruch 1, dadurch gekennzeichnet, daß
die Antriebseinheit (2) eine Bremse (29) beinhaltet.

24. Anordnung nach Anspruch 1, dadurch gekennzeichnet, daß
für die Antriebseinheit (2) ein Notantrieb vorgesehen ist.

25. Anordnung nach Anspruch 24, dadurch gekennzeichnet, daß
am rückwärtigen Ende (9) der Rotorwelle der Antriebseinheit (2) ein Anschluß für einen Handantrieb vorhanden ist.

26. Anordnung nach Anspruch 24, dadurch gekennzeichnet daß
am rückwärtigen Ende (9) der Rotorwelle der Antriebseinheit (2) ein elektrischer Notantrieb vorhanden ist.

27. Anordnung nach Anspruch 24, dadurch gekennzeichnet, daß
der elektrische Notantrieb eine weitere redundante Antriebseinheit (2) ist, die in denselben Zahnkranz (42) des Funktionselements (4; 5; 6) eingreift.

28. Verfahren zur Herstellung von strukturintegrierten Antriebseinheiten, dadurch gekennzeichnet, daß
die notwendigen und ergänzenden Elemente der Antriebseinheit (2) in Form von aufeinander abgestimmten im wesentlichen zylindrischen Komponenten mit einheitlichem Durchmesser gefertigt werden,
die Komponenten der Antriebseinheit (2) in eine bezüglich Form und Größe angepaßte umhüllende Stützkonstruktion (7) eingesetzt und in dieser zueinander justiert werden, wobei die Stützkonstruktion (7) nicht zur Aufnahme der durch die Rotorbewegung auf den Stator (22) ausgeübten Kräfte und Momente geeignet ist,
die Stützkonstruktion (7) mit den darin justierten Komponenten der Antriebseinheit (2) in eine passend vorgefertigte, im wesentlichen zylindrische Ausnehmung (12) im Material der tragenden Struktur (11) eines Grundkörpers (1) eingesetzt wird und
die statischen Komponenten der Antriebseinheit (2) durch die Stützkonstuktion (7) hindurch im Material der tragenden Struktur (11) des Grundkörpers (1) gegen Verdrehen um die Achse der Antriebseinheit (2) gesichert werden.
